# EUROPÄISCHE PATENTSCHRIFT

(11) **EP 2 639 907 B1**
(45) Veröffentlichungstag und Bekanntmachung des Hinweises auf die Patenterteilung: **31.03.2021**
(21) Anmeldenummer: 13158526.7
(22) Anmeldetag: 11.03.2013
(51) Int. Cl.: H02G 3/06

(54) **Verbindungsanordnung für Kabelkanalelemente**
Connection assembly for cable channel elements
Agencement de liaison pour éléments de caniveaux de câbles

(30) Priorität: 12.03.2012 DE 202012100872 U
(43) Veröffentlichungstag der Anmeldung: 18.09.2013
(73) Patentinhaber: OBO Bettermann Produktion Deutschland GmbH & Co.KG, 58710 Menden (DE)
(72) Erfinder: Seidel, Bernd, 08209 Auerbach (DE); Künzel, Werner, 95111 Rehau (DE); Christ, Michael, 95028 Hof (DE); Friedrich, Jochen, 95119 Naila (DE); Salzhuber, Frank, 90419 Nürnberg (DE); Engelbrecht, Bernd Jürgen, 90763 Fürth (DE)
(74) Vertreter: Haverkamp, Jens

(56) Entgegenhaltungen:
- EP-A1- 0 978 916
- EP-A1- 2 068 408
- EP-A2- 2 309 612
- EP-A2- 2 369 704
- DE-U1-202005 012 520

## Beschreibung

Die Erfindung betrifft eine Verbindungsanordnung für Kabelkanalsysteme, die in einem Eckbereich angeordnet sind, umfassend wenigstens ein erstes Verbindungselement sowie wenigstens ein zweites Verbindungselement, wobei die Verbindungselemente wenigstens ein mit dem Kabelkanalsystem in Wirkverbindung bringbares Rastelement aufweisen, wobei die Verbindungselemente zueinander verdrehbar angeordnet sind und wobei das erste Verbindungselement das zweite Verbindungselement zumindest teilweise überdeckend umschließt.

Derartige Kabelkanalsysteme sind im allgemeinen Stand der Technik bekannt und haben sich in verschiedenen Branchen seit vielen Jahren bewährt. Die Verbindungsanordnungen sowie die Kabelkanalsysteme sind je nach Einsatzbedingungen als Kunststoffteile, hergestellt im Extrusions- bzw. Koextrusionsverfahren, als Aluminiumstrangpressteile oder auch als gekantete bzw. rolllierte Metallblechprofile lieferbar.

Dabei werden die Kabelkanalsysteme in fest definierten Längen geliefert, so dass bei der Verlegung bzw. der Montage von längeren bzw. unterschiedlichen Kabelkanalsystemen mehrere einzelne Kabelkanalelemente zusammengesetzt und beispielsweise auch im Eckbereich von etwa rechtwinklig aneinander stoßenden Wänden so verlegt werden müssen, dass die in den Kabelkanalelementen befindlichen Leitungselemente über den Eckbereich verlegbar sind und dass dieser Eckbereich optisch ansprechend und sicher gegen unbefugtes Eindringen verschließbar sein soll.

Für die Verbindung von Kabelkanalsystemen, die in einem Eckbereich angeordnet sind, sind aus dem Stand der Technik verschiedene Lösungen bekannt.

So beschreibt beispielsweise die DE 20 2009 013 621 U1 eine Verbindungsanordnung für Kabelkanalsysteme, welche als sogenanntes Inneneck ausgebildet ist, zum Kaschieren der Lücke zwischen zwei etwa im rechten Winkel stumpf anstoßenden Kabelkanalelementen, wobei das Inneneck eine Deckwand sowie eine von der Deckwand abgewinkelte obere Seitenwand umfasst, wobei an der Innenfläche der Deckwand und/oder der oberen Seitenwand Rastelemente vorgesehen sind, die mit Gegenrastelementen an den Seitenwänden eines vom Inneneck abgedeckten Kabelkanalelementes kooperieren sollen, wobei an der Innenfläche der Deckwand Stützrippen zur beabstandeten Abstützung auf dem Unterteil des abgedeckten Kabelkanalelementes angeformt sind und dass die Deckwand mit einer Aussparung zur Einführung des etwa im rechten Winkel anstoßenden weiteren Kabelkanalelementes versehen ist.

Nachteilig bei diesem Inneneck wird gesehen, dass dieses nur auf das Kabelkanalelement aufgerastet werden soll und somit bei bestimmungsgemäßem Gebrauch des Kabelkanalsystems, beispielsweise bei Reinigungsarbeiten oder auch bei Materialermüdung der Rastelemente, von den Kabelkanalelementen getrennt und somit die elektrischen Leitungselemente frei zugänglich sind.

Ein weiterer Nachteil wird darin gesehen, dass es konstruktiv so ausgelegt ist, dass es nur bei wirklich im rechten Winkel einander gegenüberliegender Kabelkanalelemente einen optisch ansprechenden Abschluss realisiert.

Die Eckbereiche von beispielsweise Gebäuden weichen jedoch in der Praxis häufig vom rechten Winkel ab, so dass es in solchen nichtrechtwinkligen Eckbereichen daher nicht möglich ist, eine optisch ansprechende und elektrisch sichere Verbindung zwischen einer starren Verbindungsanordnung und zwei geraden Kabelkanalelementen, welche in einem Winkel von entweder < 90°oder > 90° zueinander angeordnet sind, zu realisieren. Die Verbindungsanordnung nach dem Stand der Technik sowie die Kabelkanalelemente passen nicht zusammen, so dass je nach Größe der Abweichungen der Fertigungstoleranzen der Kabelkanalelemente sowie der Verbindungsanordnung und der baulich bedingten Winkelabweichung des Eckbereiches Spalten zwischen der Verbindungsanordnung und den einzelnen Kabelkanalelementen entstehen, die Kabelkanalelemente nicht bündig mit den Mauern im Eckbereich abschließen oder dass die Verbindungsanordnung nicht bündig im Eckbereich mit dem Mauerwerk abschließen kann.

Weiterhin nachteilig ist, dass bei einer derartigen Montage der Verbindungsanordnung mit den dazugehörigen Kabelkanalelementen diese den baulichen Gegebenheiten insbesondere des Eckbereiches angepasst werden und so unter Spannung montiert werden, was zu einer optischen Beeinträchtigung des Kabelkanalsystems führt.

Ebenfalls nachteilig wird gesehen, dass bei einer derartig nichtrechtwinkligen Montage im Eckbereich auch die an der Verbindungsanordnung angeordneten Rastelemente nicht vollumfänglich bzw. nicht dauerhaft kraftschlüssig die Kabelkanalelemente fixieren können.

In solchen Situationen ist es erforderlich, dass zur Verlegung von Kabelkanalsystemen entsprechend verstellbare Verbindungsanordnungen zur Verfügung gestellt werden müssen.

Diese verstellbaren Verbindungsanordnungen sind aus dem Stand der Technik bekannt und bestehen in der Regel aus zwei mit den jeweiligen Kabelkanalelementen verbundenen Abdeckelementen, die miteinander gelenkig verbunden sind und gegeneinander verdrehbar bzw. verschiebbar angeordnet sind.

DE 20 2005 012 520 U1 offenbart eine Hohlkanalanordnung zur Eckumfahrung, welche als Bestandteil eines Kabelkanalsystems vorgesehen ist. Die Hohlkanalanordnung weist zwei identische, jeweils im Bereich ihrer Kontaktoberflächen aneinander dicht überlappend zur Anlage zu bringende, Hohlkanalelemente auf. Das Hohlkanalelement hat einen Steg, der sich nicht über die gesamte Höhe des Hohlkanalelements erstreckt und daher auch nicht ausgebildet ist, einen Spalt zwischen den Hohlkanalelementen zu verdecken. Der Steg wird vielmehr als Rastvorsprung, der beim Zusammenfügen der Hohlkanalelemente in eine Rastvertiefung des jeweils anderen Hohlkanalelements eingreift, offenbart. Die beiden Hohlkanalelemente sind um eine Schwenkachse verschwenkbar angeordnet.

In EP 2 309 612 A2 ist ein verstellbares Winkelformteil zur Verbindung von zwei Kabelkanalabschnitten, welche in einem Eckbereich stumpf aneinander stoßend angeordnet sind, offenbart. Das Winkelformteil weist zwei Abdeckflügel auf, die jeweils eine Seitenwange und mindestens eine von der Seitenwange abgewinkelte Deckwange aufweisen und die ferner jeweils an der Innenseite der Seitenwange angeformte Rastelemente aufweisen. Die Abdeckflügel haben einen Drehpunkt, der in der Mittelachse zwischen den beiden Abdeckflügeln angeordnet ist.

EP 2 068 408 A1 offenbart ein Winkelzubehör zum Anbringen an einer Verbindung von mindestens zwei verschieden orientierten Kabelkanälen. Das Winkelzubehör ist ein Winkelformteil mit zwei separaten Verschlussblenden, von denen eine ein vorstehendes Element umfasst und die andere eine längliche Öffnung aufweist, wobei das hervorstehende Element derart in die längliche Öffnung eingreift, dass es sich entlang der Längsrichtung der Öffnung bewegen kann und eine relative Bewegung dieser Verschlussblenden zueinander ermöglicht. Das beschriebene Winkelzubehör ist dadurch gekennzeichnet, dass die längliche Öffnung einen Längsrand aufweist, der zur Längsrichtung parallel ist und sich begrenzt zu einem Schlitz öffnet, der in den freiliegenden Rand der Verschlussblende mündet.

Ein Abschluss- oder Zwischenstück für einen Leitungskanal und ein Aufbausystem für Leitungskanäle sind in EP 2 369 704 A2 beschrieben. Es sind ein Basisteil und ein Adapterteil zur Montage an dem Basisteil vorgesehen, wobei das Basisteil und das Adapterteil im montierten Zustand an dem Leitungskanal angreifen, wobei das Basisteil und/oder das Adapterteil wenigstens zwei Raststellen aufweisen und wobei die erste Raststelle einer ersten Position des Adapterteils am Basisteil und die zweite Raststelle einer zweiten, von der ersten Position verschiedenen Position des Adapterteils am Basisteil zugeordnet ist.

In EP 0 978 916 A1 ist eine verstellbare Eck-Verbindung für Kabelkanäle offenbart. Die verstellbare Eckverbindung für Kabelkanäle weist ein erstes Element mit zwei Öffnungen auf, wobei die Öffnungen so zueinander angeordnet sind, dass die jeweiligen Achsen der Öffnungen einen Winkel bilden, wobei eine dieser Öffnungen mit Einrichtungen zur Verbindung mit einem Kabelkanal versehen ist und die andere Öffnung mit einem Ende eines zweiten Elements verbindbar ist, das an seinem gegenüberliegenden Ende mit einer Einrichtung zur Verbindung mit einem Kabelkanal versehen ist, wobei das zweite Element und das erste Element schwingend verbindbar sind, wobei die Schwingungsachse entlang dem zweiten Element verschiebbar ist.

Eine weitere derart verstellbare Verbindungsanordnung ist in der DE 20 2009 013 622 U1 beschrieben. Diese als verstellbares Winkelformteil ausgebildete Verbindungsanordnung zur Verbindung zweier Kabelkanalelemente, welche in einem Eckbereich stumpf aneinanderstoßen, umfasst zwei Abdeckflügel, welche jeweils eine Seitenwange und zumindest eine von der Seitenwange abgewinkelte Deckwange aufweisen und welche jeweils an der Innenseite der Seitenwange angeformte Rastelemente besitzen, die jeweils mit Gegenrastelementen an den Unterteilen der Kabelkanalelemente zusammenwirken, wobei ein Abdeckflügel an seiner Innenseite wenigstens einen Zapfen und der andere Abdeckflügel an seiner Innenseite wenigstens ein bogenförmiges Langloch zur Aufnahme des Zapfens aufweist, so dass die Abdeckflügel über einen ersten Winkelbereich durch eine Drehung um eine Achse außerhalb der Zapfen-Langloch-Führung bei gleichzeitiger Verschiebebewegung des Zapfens im Langloch bis zum Erreichen einer Anschlagstellung des Zapfens am Langlochende relativ zueinander verdrehbar sind.

Dies soll dadurch realisiert werden, dass die Abdeckflügel an den Innenseiten ihrer Seitenwände jeweils mit mindestens einem horizontalen Steg versehen sind, der sich jeweils bis zu einer zum benachbarten Abdeckflügel gewandten Endkante der Seitenwange erstreckt, wobei an bzw. in diesem Steg jeweils der Zapfen bzw. das Langloch so angeordnet ist, dass der Zapfen bzw. das Langlochende senkrecht oder annähernd senkrecht über der Endkante der Seitenwange steht und wobei die Endkanten der Seitenwange in ihrem Profil so aneinander angepasst sind, dass sie bei Drehung um den in Anschlagstellung befindlichen Zapfen über einen zweiten Winkelbereich in ständiger Anlage aufeinander abrollbar sind, ohne einen Spalt zwischen sich zu bilden.

Nachteilig bei dieser Verbindungsanordnung nach dem Stand der Technik wird gesehen, dass die einzelnen Abdeckflügel sehr kostenaufwändig in ihrer Herstellung sind und dass diese Verbindungsanordnung im Eckbereich optisch nicht so ansprechend aussieht, da durch die Geometrie der Abdeckflügel insbesondere im Winkelbereich eine tonnenartige Ausformung entsteht.

Ein weiterer Nachteil dieser Verbindungsanordnung wird darin gesehen, dass deren Verlegung in nichtrechtwinkligen Eckbereichen aufgrund der komplizierten Mechanik des Zapfens und des Langloches zu hohen Montagezeiten für derartige Kabelkanalsysteme führt. Ebenfalls nachteilig bei der Verbindungsanordnung nach dem Stand der Technik wird gesehen, dass die Kabelkanalelemente nur über relativ schwach dimensionierte Rastelemente in der Verbindungsanordnung und auch nur an der Unterseite fixiert sind. Die benötigte Materialüberlappung, welche zur Winkelverstellung erforderlich ist, äußert sich in der Mitte des Formteils durch einen Materialsprung in Größe der Wandstärke. Das Systemdesign und die Optik werden unterbrochen und verschlechtert.

Hier setzt die Erfindung ein, die sich die Aufgabe gestellt hat, eine Verbindungsanordnung für Kabelkanalsysteme aufzuzeigen, welche die benannten Nachteile des Standes der Technik überwindet, welche kostengünstig und wirtschaftlich herstellbar ist, welche schnell und sicher alle Eckbereiche von Kabelkanalsystemen überdeckend montierbar ist und bei deren Anordnung im Eckbereich keine Spalten zu den Kabelkanalsystemen auftreten.

Erfindungsgemäß wird diese Aufgabe durch eine Verbindungsanordnung mit den Merkmalen des Anspruches 1 gelöst. Weitere vorteilhafte Ausgestaltungen sind in den Unteransprüchen beschrieben.

Es hat sich überraschend herausgestellt, dass eine Verbindungsanordnung für Kabelkanalsysteme, die in einem Eckbereich angeordnet sind, umfassend wenigstens ein erstes Verbindungselement sowie wenigstens ein zweites Verbindungselement, wobei die Verbindungselemente wenigstens ein mit dem Kabelkanalelement in Wirkverbindung bringbares Rastelement aufweisen, wobei die Verbindungselemente zueinander verdrehbar angeordnet sind und wobei das erste Verbindungselement das zweite Verbindungselement zumindest teilweise überdeckend umschließt, sich dadurch auszeichnet, dass das erste Verbindungselement wenigstens einen, an seiner Basisfläche und/oder seiner Deckfläche angeordneten, Zapfen aufweist, dass das zweite Verbindungselement wenigstens eine, an seiner Basisfläche und/oder seine Deckfläche angeordnete, Öffnung sowie wenigstens einen davon beabstandet angeordneten, in das erste Verbindungselement ragenden Steg aufweist, wobei der Zapfen des ersten Verbindungselementes drehbar in der Öffnung des zweiten Verbindungselementes angeordnet ist. Durch diese äußerst vorteilhafte Ausgestaltung der erfindungsgemäßen Verbindungsanordnung für Kabelkanalsysteme ist eine Montage in Eckbereichen von beispielsweise Gebäuden, die nicht im rechten Winkel angeordnet sind, jederzeit und optisch ansprechend möglich. Die erfindungsgemäße Verbindungsanordnung für Kabelkanalsysteme zeichnet sich weiterhin dadurch aus, dass die zueinander drehbar angeordneten Verbindungselemente der jeweiligen nicht rechtwinkligen Situation im Eckbereich anpassbar sind, ohne dass im Bereich zu den Kabelkanalelementen ein optisch unschöner und somit nicht gewünschter Spalt entsteht.

Die erfindungsgemäße Verbindungsanordnung für Kabelkanalsysteme ist weiterhin so ausgebildet, dass der Zapfen des ersten Verbindungselementes einstückig an der Basisfläche und/oder der Deckfläche angeordnet ist. Hierdurch ist eine kostengünstige Herstellung der erfindungsgemäßen Verbindungsanordnung möglich, sowie auch ein langjähriger und sicherer Einsatz der zueinander drehbar angeordneten Verbindungselemente.

Ein weiterer Vorteil der erfindungsgemäßen Verbindungsanordnung für Kabelkanalsysteme besteht darin, dass beabstandet vom Zapfen des ersten Verbindungselementes ein Sperrelement an der Basisfläche und/oder der Deckfläche angeordnet ist. Durch die Positionierung dieses Sperrelementes, welches beispielsweise ebenfalls einstückig mit der Basisfläche und/oder der Deckfläche verbunden ist, lassen sich bereits bei der Herstellung der erfindungsgemäßen Verbindungsanordnung verschiedene Winkelbereiche der zueinander drehbar angeordneten Verbindungselemente einstellen.

Dabei hat sich weiterhin als vorteilhaft herausgestellt, dass von der Öffnung des zweiten Verbindungselementes wenigstens ein Vorsprung beabstandet angeordnet ist. Dieser Vorsprung des zweiten Verbindungselementes kann ebenfalls einstückig an diesem angeordnet sein und dient dazu, dass in einer ersten Winkelstellung des ersten Verbindungselementes zum zweiten Verbindungselement, welche geringer als 90° ist, der Vorsprung des zweiten Verbindungselementes am Sperrelement des ersten Verbindungselementes anliegt.

Ebenfalls vorteilhaft bei der erfindungsgemäßen Verbindungsanordnung für Kabelkanalsysteme ist es, dass in einer zweiten Winkelstellung des ersten Verbindungselementes zum zweiten Verbindungselement, welche größer als 90° ist, der Vorsprung des zweiten Verbindungselementes vom Sperrelement des ersten Verbindungselementes beabstandet angeordnet ist. Diese Winkelstellung wird dadurch eingestellt bzw. begrenzt, dass die Basisfläche und/oder die Deckfläche des zweiten Verbindungselementes zumindest teilweise an der Basisfläche und/oder der Deckfläche des ersten Verbindungselementes anliegt.

Ein weiterer Vorteil der erfindungsgemäßen Verbindungsanordnung für Kabelkanalsysteme besteht darin, dass der Drehpunkt der Verbindungselemente in dieser vorteilhaften Ausführung nicht in der Mittelachse, welche als Linie zwischen dem ersten Verbindungselement und dem zweiten Verbindungselement zu definieren ist, sondern beabstandet zum Steg im zweiten Verbindungselement angeordnet ist. Vorteilhaft bei dieser Ausführungsform ist, dass die von außen sichtbare Ecke zwischen dem ersten Verbindungselement und dem zweiten Verbindungselement immer winklig zueinander angeordnet ist und somit bei bestimmungsgemäßer Montage in beispielsweise Gebäuden, Möbelteilen bzw. Schreibtischen an der erfindungsgemäßen Verbindungsanordnung für Kabelkanalsysteme winklig anordenbar ist und somit eine optisch ansprechende Verbindungsanordnung für Kabelkanalsysteme zur Verfügung gestellt werden kann, die insbesondere bei nicht rechtwinkligen Eckbereichen von Gebäuden, Räumen und dergleichen leicht und sicher montierbar ist sowie ein optisch ansprechendes Aussehen aufweisen.

In einer weiteren Ausführungsform der erfindungsgemäßen Verbindungsanordnung für Kabelkanalsysteme ist der Zapfen des ersten Verbindungselementes im Querschnitt etwa rund, oval, prismatisch, mehreckig und dergleichen ausgebildet. Durch diese Ausführungsform ist es vorteilhafterweise möglich, die Verbindungsanordnung kostengünstig herzustellen und sowohl eine stufenlose Verdrehung der Verbindungselemente zueinander zu realisieren als auch eine rastende Verdrehung durch beispielsweise prismatisch bzw. mehreckig ausgebildete Zapfen.

Dabei kann es weiterhin sehr vorteilhaft sein, dass der Zapfen des ersten Verbindungselementes eine Höhe aufweist, die wenigstens der Wanddicke der Basisfläche und/oder der Deckfläche des zweiten Verbindungselementes entspricht. Vorteilhafterweise ist hierdurch eine einfache und werkzeuglose Verdrehung der Verbindungselemente der erfindungsgemäßen Verbindungsanordnung für Kabelkanalsysteme möglich. Weiterhin ist es vorteilhafterweise möglich, dass die Kabelkanalelemente einfach und ohne großen Kraftaufwand in die Verbindungselemente der erfindungsgemäßen Verbindungsanordnung einschiebbar sind.

Es hat sich weiterhin als vorteilhaft herausgestellt, dass die Basisfläche und/oder die Deckfläche des zweiten Verbindungselementes eine im Querschnitt etwa dreieckförmig ausgebildete, um etwa eine Wanddicke versetzt angeordnete Fläche aufweist. Diese geometrische Ausgestaltung führt zu einer kostengünstigen und wirtschaftlichen Herstellung der erfindungsgemäßen Verbindungsanordnung, einer baustellengerechten Montage der Verbindungsanordnung für Kabelkanalsysteme sowie der im Eckbereich anzuordnenden Kabelkanalelemente und gewährleistet eine optimale Anpassung der erfindungsgemäßen Verbindungsanordnung im nicht rechtwinkligen Eckbereich von beispielsweise Gebäuden.

Dabei kann es ebenfalls vorteilhaft sein, dass die Basisfläche und/oder die Deckfläche des zweiten Verbindungselementes wenigstens eine Kerbe aufweist. Diese Kerbe, welche vorteilhafterweise in der versetzt angeordneten Fläche des zweiten Verbindungselementes angeordnet ist, dient als sog.

Sollbruchstelle und soll insbesondere bei einer Verlegung der erfindungsgemäßen Verbindungsanordnung in einer Winkelstellung des ersten Verbindungselementes zum zweiten Verbindungselement, welche größer als 90° ist, dazu dienen, die möglicherweise über die Deckfläche des ersten Verbindungselementes hervorragende Ecke der Deckfläche des zweiten Verbindungselementes mechanisch zu entfernen.

In einer weiteren vorteilhaften Ausführungsform der erfindungsgemäßen Verbindungsanordnung sind an der Basisfläche und/oder der Deckfläche der Verbindungselemente von dieser wegragende Führungselemente angeordnet. Diese sind vorteilhafterweise so ausgebildet, dass sie mit einer am Kabelkanalelement angeordneten Nut bei der Einführung der Kabelkanalelemente in die erfindungsgemäße Verbindungsanordnung in Wirkverbindung stehen und so nicht nur für eine optisch ansprechende Verlegung der Verbindungsanordnung für Kabelkanalsysteme sorgen, sondern auch dass die Kabelkanalelemente über die Führungselemente der Verbindungselemente und die an den Verbindungselementen angeordneten Rastelemente kraftschlüssig und/oder formschlüssig und sicher fixiert sind.

Es hat sich auch als vorteilhaft herausgestellt, dass die erfindungsgemäße Verbindungsanordnung für Kabelkanalsysteme aus einem polymeren Werkstoff hergestellt ist. Unter polymerem Werkstoff sind Materialien gemeint, wie Polyvinylchlorid (PVC); Polyolefin, wie Polypropylen (PP) oder Polyethylen (PE); styrolbasiertes Polymer, wie Polystyrol (PS) oder StyrolButadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien. Dabei können dem polymeren Werkstoff des Abdeckelementes geeignete Füll- und/oder Verstärkungsstoffe beigemischt sein, die die mechanischen Eigenschaften positiv beeinflussen insbesondere Glasfaser, Glaskugeln aber auch Füllstoffe wie Kreide, Teflon und dergleichen.

Hierdurch ist es vorteilhafterweise möglich, die Herstellungskosten der erfindungsgemäßen Kabelkanalsysteme in einem überschaubaren Rahmen zu gestalten und andererseits durch an sich bekannte Extrusions- bzw. Koextrusionsverfahren optisch und farblich ansprechende Kabelkanalsysteme zur Verfügung zu stellen, welche sowohl nicht korrodieren als auch nicht elektrisch leitfähig sind.

Die erfindungsgemäße Verbindungsanordnung für Kabelkanalsysteme zeichnet sich weiterhin dadurch aus, dass sie sowohl für Kabelkanalsysteme aus polymeren Werkstoffen als auch aus metallischen Werkstoffen zu einer optisch ansprechenden und wirtschaftlichen Verlegung insbesondere im nichtrechtwinkligen Eckbereich von beispielsweise Gebäuden geeignet ist.

Die Erfindung soll nun an Ausführungsbeispielen, die diese nicht einschränken sollen, näher beschrieben werden.

Es zeigen:
- **Fig. 1:**: perspektivische Darstellung einer erfindungsgemäßen Verbindungsanordnung für Kabelkanalsysteme,
- **Fig. 2:**: perspektivische Darstellung der Rückseite einer erfindungsgemäßen Verbindungsanordnung für Kabelkanalsysteme,
- **Fig. 3:**: perspektivische Darstellung des ersten Verbindungselementes der erfindungsgemäßen Verbindungsanordnung und
- **Fig. 4:**: perspektivische Darstellung des zweiten Verbindungselementes der erfindungsgemäßen Verbindungsanordnung.

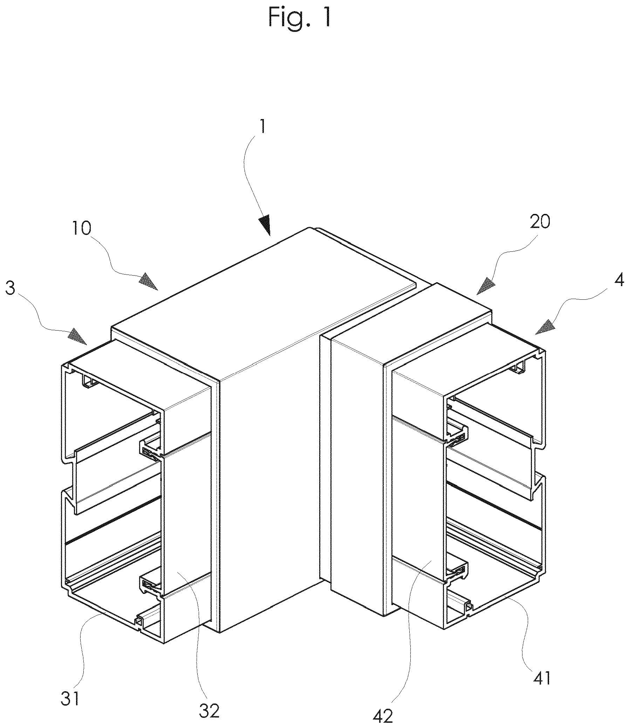

In der Fig. 1 ist eine perspektivische Darstellung der erfindungsgemäßen Verbindungsanordnung 1 für Kabelkanalsysteme 3, 4 dargestellt.

Die Verbindungsanordnung 1 für Kabelkanalsysteme 3, 4, die in einem Eckbereich angeordnet sind, umfasst ein erstes Verbindungselement 10 sowie ein zweites Verbindungselement 20, wobei die Verbindungselemente 10, 20 zueinander verdrehbar angeordnet sind und wobei das erste Verbindungselement 10 das zweite Verbindungselement 20 zumindest teilweise überdeckend umschließt.

Das Kabelkanalsystem 3, 4 umfasst in diesem Ausführungsbeispiel ein etwa U-förmiges Kanalunterteil 31, 41 sowie insbesondere einer daran anordenbaren Abdeckung 32, 42, welche über an sich bekannte Rastverbindungen mit dem etwa U-förmigen Kanalunterteil 31, 41 verbunden ist. Das Kabelkanalsystem 3, 4, welches in der Fig. 1 nur abschnittsweise dargestellt ist, ist jeweils in einem etwa rechten Winkel zueinander angeordnet in der erfindungsgemäßen Verbindungsanordnung 1 eingebracht.

Die erfindungsgemäße Verbindungsanordnung 1 für Kabelkanalsysteme 3, 4 ist so ausgebildet, dass sie in einem Eckbereich beispielsweise eines Gebäudes, eines Raumes und dergleichen so einbringbar ist, dass die einander gegenüberliegend angeordneten Kabelkanalsysteme 3, 4 sowohl in einem rechten Winkel von 90° als auch in Winkeln von weniger als 90°, wie beispielsweise 85° bis 90°, aber auch in Winkeln größer als 90°, wie beispielsweise 91 ° bis 95°, anordenbar sind.

Dabei ist die erfindungsgemäße Verbindungsanordnung 1 so ausgebildet, dass sich zwischen dem ersten Verbindungselement 10 und dem Kabelkanalsystem 3 sowie dem zweiten Verbindungselement 20 und dem Kabelkanalsystem 4 im direkten Übergangsbereich kein Spalt bildet.

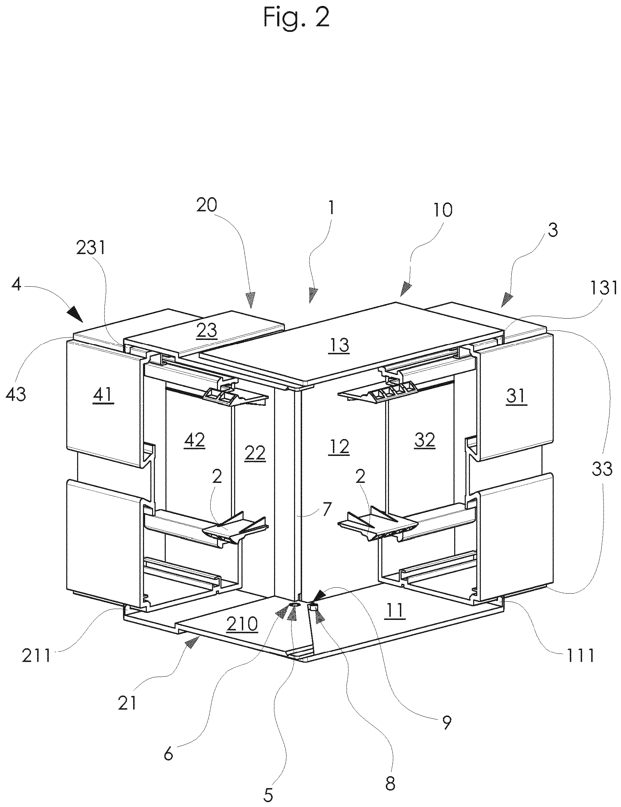

In der Fig. 2 ist eine perspektivische Rückansicht der erfindungsgemäßen Verbindungsanordnung 1 für Kabelkanalsysteme 3, 4 dargestellt.

Die Verbindungsanordnung 1 für Kabelkanalsysteme 3, 4, die in einem Eckbereich angeordnet sind, umfasst ein erstes Verbindungselement 10 sowie ein zweites Verbindungselement 20, wobei die Verbindungselemente 10, 20 wenigstens ein mit dem Kabelkanalelement 31, 41 in Wirkverbindung bringbares Rastelement 2 aufweisen, die Verbindungselemente 10, 20 zueinander verdrehbar angeordnet sind und wobei das erste Verbindungselement 10 das zweite Verbindungselement 20 zumindest teilweise überdeckend umschließt.

In dieser Darstellung sind die Kabelkanalsysteme 3, 4 nur abschnittsweise dargestellt. Das Kabelkanalsystem 3, 4 umfasst in diesem Ausführungsbeispiel ein etwa U-förmiges Kanalunterteil 31, 41 sowie eine daran über an sich bekannte Rastverbindungen anordenbare Abdeckung 32, 42.

Bei bestimmungsgemäßem Gebrauch wird zumindest ein U-förmiges Kanalunterteil 31, 41 soweit in das Verbindungselement 10, 20 eingeschoben, dass die Rastelemente 2 das U-förmige Kanalunterteil 31, 41 umgreifen. Die Abdeckung 32, 42 ist mit ihrem freien stirnseitigen Ende direkt an den Rastelementen 2 angeordnet.

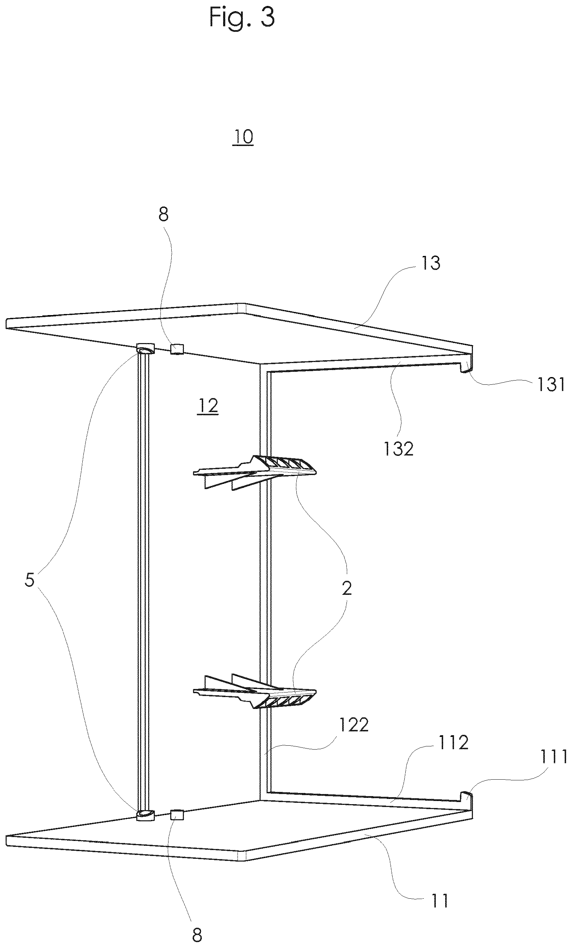

Das erste Verbindungselement 10 weist einen an der Basisfläche 11 angeordneten Zapfen 5 auf, der im Detail nochmals in Fig. 3 näher dargestellt und beschrieben ist.

Das zweite Verbindungselement 20 weist eine seine Basisfläche 21 durchdringende Öffnung 6 auf sowie einen davon beabstandet angeordneten, in das erste Verbindungselement 10 ragenden Steg 7 auf.

Der Zapfen 5 des ersten Verbindungselementes 10 ist in diesem Ausführungsbeispiel drehbar in der Öffnung 6 des zweiten Verbindungselementes 20 angeordnet. Durch diese vorteilhafte Ausgestaltung der erfindungsgemäßen Verbindungsanordnung 1 für Kabelkanalsysteme 3, 4 ist es somit möglich, nicht rechtwinklige Eckbereiche von Gebäuden, Wohnungen und dergleichen mit derartigen Kabelkanalsystemen 3, 4 zu bestücken.

Die erfindungsgemäße Verbindungsanordnung 1 für Kabelkanalsysteme 3, 4 zeichnet sich dadurch aus, dass der Drehpunkt, über den das erste Verbindungselement 10 zum zweiten Verbindungselement 20 drehbar ist, nicht direkt auf der Mittelachse, welche als gedachte Linie am Schnittpunkt des ersten Verbindungselementes 10 zum zweiten Verbindungselement 20 ist, sondern dass der Drehpunkt, umfassend den drehbar in der Öffnung 6 des zweiten Verbindungselementes 20 angeordneten Zapfen 5 des ersten Verbindungselementes 10 beabstandet von der Kante, an dem das erste Verbindungselement 10 mit seiner Seitenfläche 12 am zweiten Verbindungselement 20 mit seiner Seitenfläche 22 anliegt, angeordnet ist.

Ein weiterer Vorteil der erfindungsgemäßen Verbindungsanordnung 1 für Kabelkanalsysteme 3, 4 besteht darin, dass der Drehpunkt zwischen den Verbindungselementen 10, 20 direkt im Bereich der Basisfläche 21 und/oder der Deckfläche 23 des zweiten Verbindungselementes 20 angeordnet ist.

Hierdurch ist die erfindungsgemäße Verbindungsanordnung 1 für Kabelkanalsysteme 3, 4 vorteilhafterweise geeignet für alle Eckbereiche in Gebäuden, Räumen und dergleichen, die sowohl rechtwinklig als auch nichtrechtwinklig sind, leicht und sicher montiert zu werden und gleichzeitig immer ein optisch ansprechendes Aussehen aufweist durch die immer winklig zueinander angeordneten Verbindungselemente 10, 20. Eine aus dem Stand der Technik nachteilig bekannte und beispielsweise in der DE 20 2009 013 622 U1 dargestellte bauchige bzw. tonnenförmige Optik im Verbindungsbereich der Verbindungselemente wird erst durch die erfindungsgemäße Verbindungsanordnung 1 vermieden.

In diesem Ausführungsbeispiel ist der Zapfen 5 des ersten Verbindungselementes 10 einstückig an der Basisfläche 11 angeordnet. Beabstandet vom Zapfen 5 des ersten Verbindungselementes 10 ist ein Sperrelement 8 an der Basisfläche 11 des ersten Verbindungselementes 10 angeordnet.

Von der Öffnung 6 des zweiten Verbindungselementes 20 ist ein Vorsprung 9 beabstandet angeordnet, der in diesem Ausführungsbeispiel in einer ersten Winkelstellung des ersten Verbindungselementes 10 zum zweiten Verbindungselement 20, welche kleiner als 90° ist, am Sperrelement 8 anliegt.

Ebenfalls vorteilhaft einsetzbar ist die erfindungsgemäße Verbindungsanordnung 1 für Kabelkanalsysteme 3, 4 in einer zweiten Winkelstellung des ersten Verbindungselementes 10 zum zweiten Verbindungselement 20, welche größer als 90° und hier nicht dargestellt ist. Diese Winkelstellung wird dadurch eingestellt bzw. begrenzt, dass die Basisfläche 21 und/oder die Deckfläche 23 des zweiten Verbindungselementes 20 zumindest teilweise an der Basisfläche 11 und/oder der Deckfläche 13 des ersten Verbindungselementes 10 anliegt.

Das erste Verbindungselement 10 weist in diesem Ausführungsbeispiel eine Basisfläche 11, eine davon über eine Seitenfläche 12 beabstandete Deckfläche 13 sowie an der Seitenfläche 12 angeordnete Rastelemente 2 auf. An den freien Enden der Basisfläche 11 sowie der Deckfläche 13 des ersten Verbindungselementes 10 sind Führungselemente 111, 131 einstückig angeformt.

Die Führungselemente 111, 131 treten in Wirkverbindung mit einer Nut 33 des U-förmigen Kanalunterteils 31, so dass dieses an der Seitenfläche 12 des ersten Verbindungselementes 10 so anliegt, dass die Rastelemente 2 mit der als Gegenrastelement ausgebildeten Wand des U-förmigen Kanalunterteils 31 verrasten.

Der Zapfen 5 des ersten Verbindungselementes 10 ist in diesem Ausführungsbeispiel im Querschnitt etwa rund ausgebildet und weist eine Höhe auf, die in etwa der Wanddicke der Basisfläche 21 des zweiten Verbindungselementes 20 entspricht.

Der Steg 7 des zweiten Verbindungselementes 20 weist in diesem Ausführungsbeispiel eine Höhe auf, die wenigstens der doppelten Wanddicke der Seitenfläche 12 des ersten Verbindungselementes 10 entspricht.

Im zweiten Verbindungselement 20 ist das Kabelkanalsystem 4 so angeordnet, dass die an der Basisfläche 22 des zweiten Verbindungselementes 20 angeordneten Rastelemente 2 das etwa U-förmige Kanalunterteil 41 an der als Gegenrastelement ausgebildeten Wandung kraftschlüssig und/oder formschlüssig hintergreifen.

Die über an sich bekannte Rastverbindungen am U-förmigen Kanalunterteil 41 angeordnete Abdeckung 42 liegt mit ihrem freien Ende direkt am Rastelement 2 an.

Das zweite Verbindungselement 20 weist an seiner Basisfläche 21 sowie an seiner Deckfläche 23 Führungselemente 211, 231 auf, die so ausgebildet und angeordnet sind, dass sie mit der im U-förmigen Kanalunterteil 41 angeordneten Nut 43 in Wirkverbindung treten. Die Führungselemente 211, 231 des zweiten Verbindungselementes 20 dienen so zum sicheren Einführen des Kabelkanalsystems 4 in die erfindungsgemäße Verbindungsanordnung 1 und führen so in Verbindung mit den an der Seitenfläche 22 des zweiten Verbindungselementes 20 angeordneten Rastelementen 2 zu einer sicheren Positionierung bzw. Fixierung des Kabelkanalsystems 4.

In diesem Ausführungsbeispiel ist das zweite Verbindungselement 20 so ausgebildet, dass die Basisfläche 21 und die Deckfläche 23 eine im Querschnitt etwa dreieckförmig ausgebildete und um etwa eine Wanddicke versetzt angeordnete Fläche 210, 230 aufweisen. Diese versetzt angeordnete Fläche 210, 230 des zweiten Verbindungselementes 20 sind bei bestimmungsgemäßem Gebrauch der erfindungsgemäßen Verbindungsanordnung 1 jeweils unter der Deckfläche 13 bzw. über der Basisfläche 11 des ersten Verbindungselementes 10 angeordnet.

In diesem Ausführungsbeispiel ist der Steg 7 des zweiten Verbindungselementes 20 so ausgebildet, dass bei unterschiedlicher Winkelstellung des ersten Verbindungselementes 10 zum zweiten Verbindungselement 20 von außen kein Spalt zwischen den Verbindungselementen 10, 20 erkennbar ist.

Die erfindungsgemäße Verbindungsanordnung 1 für Kabelkanalsysteme 3, 4 ermöglicht es, insbesondere durch den am ersten Verbindungselement 10 angeordneten Zapfen 5 sowie der im zweiten Verbindungselement 20 angeordneten Öffnung 6, sowie der dadurch realisierten drehbaren Verschiebung des ersten Verbindungselementes 10 zum zweiten Verbindungselement 20, dass dieses in Eckbereichen von Gebäuden, Räumen und dergleichen, die nicht rechtwinklig ausgebildet sind, schnell und sicher montierbar ist, ohne dass eine aus dem Stand der Technik bekannte Spaltbildung zwischen der Verbindungsanordnung 1 sowie den Kabelkanalsystemen 3, 4 entsteht.

In der Fig. 3 ist eine perspektivische Darstellung des ersten Verbindungselementes 10 der erfindungsgemäßen Verbindungsanordnung 1 dargestellt.

Das erste Verbindungselement 10 ist in diesem Ausführungsbeispiel so ausgestaltet, dass es eine Basisfläche 11 und einer von dieser über eine Seitenfläche 12 beabstandete Deckfläche 13 aufweist. Die Flächen 11, 12, 13 sind in diesem Ausführungsbeispiel prismatisch, insbesondere rechteckig ausgebildet.

An der Basisfläche 11 und an der Deckfläche 13 des ersten Verbindungselementes 10 ist ein Zapfen 5 angeordnet, der in diesem Ausführungsbeispiel einstückig an der Basisfläche 11 und der Deckfläche 13 angeordnet ist. Der Zapfen 5 des ersten Verbindungselementes 10 ist in diesem Ausführungsbeispiel im Querschnitt etwa rund bzw. hohl ausgebildet und weist eine Höhe auf, die etwa der Wanddicke der Basisfläche 21 bzw. der Deckfläche 23 des nicht dargestellten zweiten Verbindungselementes 20 entspricht.

Der Zapfen 5 des ersten Verbindungselementes 10 ist in diesem Ausführungsbeispiel weiterhin so ausgebildet, dass er an seinem von der Basisfläche 11 bzw. der Deckfläche 13 beabstandeten Ende eine Schräge aufweist, so dass die Höhe des Zapfens 5 unterschiedlich ist. Diese Ausführungsform des Zapfens 5 des ersten Verbindungselementes 10 führt vorteilhafterweise dazu, dass das zweite Verbindungselement 20 leicht in das erste Verbindungselement 10 einführbar und die Öffnung 6 der Basisfläche 21 und/oder der Deckfläche 23 des zweiten Verbindungselementes 20 über den Zapfen 5 des ersten Verbindungselementes 10 führbar und einbringbar ist.

Das erste Verbindungselement 10 ist in diesem Ausführungsbeispiel weiterhin so ausgebildet, dass an der Seitenfläche 12 Rastelemente 2 voneinander beabstandet angeordnet sind. Die Rastelemente 2 sind in diesem Ausführungsbeispiel einstückig mit der Seitenfläche 12 des ersten Verbindungselementes 10 verbunden.

Die Basisfläche 11 und die Deckfläche 13 des ersten Verbindungselementes 10 weisen in diesem Ausführungsbeispiel Führungselemente 111, 131 auf, welche an den der Seitenfläche 12 gegenüberliegenden freien Enden angeordnet sind.

Die Basisfläche 11, die Seitenfläche 12 sowie die Deckfläche 13 des ersten Verbindungselementes weisen in diesem Ausführungsbeispiel jeweils einen rechtwinklig daran angeordneten Rand 112, 122, 132 auf, der bei bestimmungsgemäßem Gebrauch der erfindungsgemäßen Verbindungsanordnung 1 mit der Außenkontur des hier nicht dargestellten Kabelkanalsystems 3, 4 in direktem Kontakt steht.

Die Basisfläche 11 und die Deckfläche 13 des ersten Verbindungselementes 10 weisen in diesem Ausführungsbeispiel noch ein vom Zapfen 5 beabstandetes Sperrelement 8 auf. Dieses Sperrelement 8 ist in diesem Ausführungsbeispiel im Querschnitt etwa rund ausgebildet und einstückig mit der Fläche 11, 13 des ersten Verbindungselementes 10 verbunden. Es liegt jedoch auch im Rahmen der Erfindung, dass das Sperrelement 8 kraftschlüssig und/oder formschlüssig mit der Fläche 11, 13 des ersten Verbindungselementes 10 verbunden ist wie beispielsweise über einen nachträglich über eine Öffnung eingestecken Dom bzw. ein anderes Sperrelement wie beispielsweise eine Schraube.

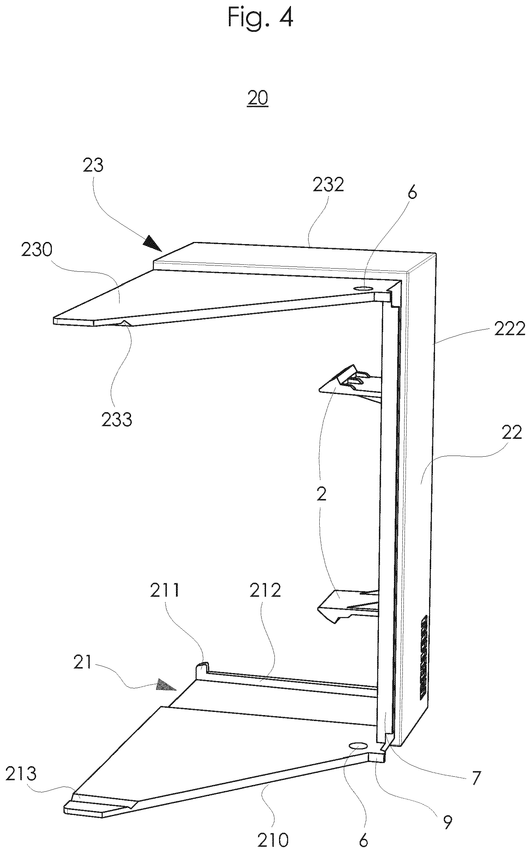

In der Fig. 4 ist eine perspektivische Darstellung des zweiten Verbindungselementes 20 der erfindungsgemäßen Verbindungsanordnung 1 dargestellt.

Das zweite Verbindungselement 20 weist in diesem Ausführungsbeispiel eine Basisfläche 21 sowie eine von dieser über die Seitenfläche 22 beabstandet angeordnete Deckfläche 23 auf. In der Basisfläche 21 und der Deckfläche 23 des zweiten Verbindungselementes 20 ist eine diese durchdringende Öffnung 6 angeordnet. Es liegt jedoch auch im Rahmen der Erfindung, dass die Öffnung 6 nur teilweise in die Basisfläche 21 und die Deckfläche 23 des ersten Verbindungselementes 10, diese nicht durchdringend, eingebracht ist.

Von der Öffnung 6 der Basisfläche 21 und der Deckfläche 23 des zweiten Verbindungselementes 20 ist eine Vorsprung 9 beabstandet angeordnet. Der Vorsprung 9 des zweiten Verbindungselementes 20 weist in diesem Ausführungsbeispiel die gleiche Wanddicke wie die Basisfläche 21 bzw. der Deckfläche 23 des zweiten Verbindungselementes 20 auf.

Im Querschnitt gesehen ist der Vorsprung 9 etwa nasenförmig ausgebildet.

An der Seitenfläche 22 des zweiten Verbindungselementes 20 sind in diesem Ausführungsbeispiel Rastelemente 2 angeordnet, die voneinander beabstandet positioniert sind. Die Rastelemente 2 des zweiten Verbindungselementes 20 dienen bei bestimmungsgemäßem Gebrauch dazu, das U-förmige Kanalunterteil 41 kraftschlüssig zu fixieren.

An der Seitenfläche 22 des zweiten Verbindungselementes 20 ist in diesem Ausführungsbeispiel ein Steg 7 etwa rechtwinklig angeordnet. Der Steg 7 weist in diesem Ausführungsbeispiel eine Höhe auf, die etwa der doppelten Wanddicke der nicht dargestellten Seitenfläche 12 des ersten Verbindungselementes 10 entspricht.

Bei bestimmungsgemäßem Gebrauch der erfindungsgemäßen Verbindungsanordnung 1 ragt der Steg 7 des zweiten Verbindungselementes 20 so in das erste Verbindungselement 10 hinein, dass er entweder an der Seitenfläche 12 anliegt oder von dieser beabstandet angeordnet ist.

Die Basisfläche 21 und die Deckfläche 23 des zweiten Verbindungselementes 20 weisen in diesem Ausführungsbeispiel ein Führungselement 211, 231 auf, welches bei bestimmungsgemäßem Gebrauch mit der hier nicht dargestellten Nut 43 des Kabelkanalsystems 4 in Wirkverbindung steht.

An der Basisfläche 21, der Seitenfläche 22 sowie der Deckfläche 23 des zweiten Verbindungselementes ist ein umlaufender Rand 212, 222, 232 angeordnet, der zur weiteren Führung des in das zweite Verbindungselement 20 einbringbaren Kabelkanalsystems 4 dient.

Weiterhin ist an der Basisfläche 21 ein von dieser etwa rechtwinklig wegragendes Führungselement 211 und an der Deckfläche 23 ein von dieser ebenfalls wegragendes Führungselement 231 angeordnet. Diese der Seitenfläche 22 des zweiten Verbindungselementes 20 gegenüberliegend angeordneten Führungselemente 211, 231 dienen der Führung des einzubringenden Kabelkanalsystems 4 sowie zur Wirkverbindung mit der Nut 43 des Kabelkanalsystems 4.

Die Basisfläche 21 und die Deckfläche 23 des zweiten Verbindungselementes 20 weisen eine im Querschnitt etwa dreieckförmig ausgebildete, um etwa eine Wanddicke zur Fläche 21, 23 versetzt angeordnete Fläche 210, 230 auf.

Die versetzt angeordnete Fläche 210, 230 wird bei der Montage des ersten Verbindungselementes 10 mit dem zweiten Verbindungselement 20 zu erfindungsgemäßen Verbindungsanordnung 1 über die Basisfläche 11 bzw. unter die Deckfläche 13 des ersten Verbindungselementes 10 eingebracht.

An dem dem Führungselement 211, 231 der Basisfläche 21 sowie der Deckfläche 23 gegenüberliegend angeordneten freien Ende ist eine Kerbe 213, 233 angeordnet.

Die Kerbe 213, 233 dient dazu, dass bei bestimmungsgemäßer Montage der erfindungsgemäßen Verbindungsanordnung 1 für Kabelkanalsysteme 3, 4 in nicht rechtwinkligen Eckbereichen, welche größer als 90° sind, das freie Ende der Basisfläche 21 sowie der Deckfläche 23 an der Kerbe 213, 233 von den Flächen 21, 23 entfernt wird, so dass die erfindungsgemäße Verbindungsanordnung 1 für Kabelkanalsysteme 3, 4 überhaupt montierbar und optisch ansprechend anordenbar ist.

## Patentansprüche

1. Verbindungsanordnung (1) für Kabelkanalsysteme (3, 4), die in einem Eckbereich angeordnet sind, umfassend wenigstens ein erstes Verbindungselement (10), das eine Basisfläche (11) und eine von dieser über eine Seitenfläche (12) beabstandete Deckfläche (13) aufweist, ein Kabelkanalelement (31), sowie wenigstens ein zweites Verbindungselement (20), das eine Basisfläche (21) und eine von dieser über eine Seitenfläche (22) beabstandete angeordnete Deckfläche (23) aufweist, und ein weiteres Kabelkanalelement (41) aufweist, wobei die Verbindungselemente (10, 20) wenigstens ein, mit dem jeweiligen Kabelkanalelement (31, 41) in Wirkverbindung bringbares Rastelement (2) aufweisen, wobei die Verbindungselemente (10, 20) zueinander verdrehbar angeordnet sind und wobei das erste Verbindungselement (10) das zweite Verbindungselement (20) zumindest teilweise überdeckend umschließt, wobei das erste Verbindungselement (10) wenigstens einen, an seiner Basisfläche (11) und/oder seiner Deckfläche (13) angeordneten, Zapfen (5) aufweist, und das zweite Verbindungselement (20) wenigstens eine, an seiner Basisfläche (21) und/oder seine Deckfläche (22) angeordnete, Öffnung (6), sowie wenigstens einen davon beabstandet angeordneten Steg (7) aufweist, wobei der Zapfen (5) des ersten Verbindungselements (10) drehbar in der Öffnung (6) des zweiten Verbindungselements (20) angeordnet ist, wobei der Drehpunkt der Verbindungselemente (10, 20), umfassend den in der Öffnung (6) des zweiten Verbindungselementes (20) angeordneten Zapfen (5) des ersten Verbindungselementes (10), beabstandet zum Steg (7) im zweiten Verbindungelement (20) angeordnet ist, **dadurch gekennzeichnet, dass** der Steg (7) des zweiten Verbindungselementes (20) so ausgebildet, dass er sich am Ende der Seitenfläche (22) über die gesamte Höhe des zweiten Verbindungselements (20) erstreckt, etwa rechtwinklig an der Seitenfläche (22) angeordnet ist und eine Höhe aufweist, die etwa der doppelten Wanddicke der Seitenfläche (12) des ersten Verbindungselementes (10) entspricht, und in das erste Verbindungselement (10) so hineinragt, dass er entweder an der Seitenfläche (12) anliegt oder von dieser beabstandet angeordnet ist, so dass bei unterschiedlicher Winkelstellung des ersten Verbindungelementes (10) zum zweiten Verbindungselement (20) von außen kein Spalt zwischen den Verbindungselementen (10, 20) erkennbar ist.

2. Verbindungsanordnung (1) nach Anspruch 1, **dadurch gekennzeichnet, dass** der Zapfen (5) des ersten Verbindungselements (10) einstückig an der Basisfläche (11) und/oder der Deckfläche (13) angeordnet ist.

3. Verbindungsanordnung (1) nach einem der vorhergehenden Ansprüche, **dadurch gekennzeichnet, dass** beabstandet vom Zapfen (5) des ersten Verbindungselements (10) ein Sperrelement (8) an der Basisfläche (11) und/oder der Deckfläche (13) angeordnet ist.

4. Verbindungsanordnung (1) nach einem der vorhergehenden Ansprüche, **dadurch gekennzeichnet, dass** von der Öffnung (6) des zweiten Verbindungselements (20) wenigstens ein Vorsprung (9) beabstandet angeordnet ist.

5. Verbindungsanordnung (1) nach Anspruch 3 oder Anspruch 4, **dadurch gekennzeichnet, dass** in einer ersten Winkelstellung des ersten Verbindungselements (10) zum zweiten Verbindungselement (20) der Vorsprung (9) des zweiten Verbindungselements (20) am Sperrelement (8) des ersten Verbindungselements (10) anliegt.

6. Verbindungsanordnung (1) nach Anspruch 3 oder Anspruch 4, **dadurch gekennzeichnet, dass** in einer zweiten Winkelstellung des ersten Verbindungselements (10) zum zweiten Verbindungselement (20) der Vorsprung (9) des zweiten Verbindungselements (20) vom Sperrelement (8) des ersten Verbindungselements (10) beabstandet angeordnet ist.

7. Verbindungsanordnung (1) nach einem der vorhergehenden Ansprüche, **dadurch gekennzeichnet, dass** der Drehpunkt, umfassend den in der Öffnung (6) des zweiten Verbindungselementes (20) angeordneten Zapfen (5) des ersten Verbindungselementes (10) in der Basisfläche (21) und / oder der Deckfläche (23) des zweiten Verbindungselementes (20) angeordnet ist.

8. Verbindungsanordnung (1) nach einem der vorhergehenden Ansprüche, **dadurch gekennzeichnet, dass** der Zapfen (5) des ersten Verbindungselements (10) im Querschnitt etwa rund, oval, prismatisch oder mehreckig ausgebildet ist.

9. Verbindungsanordnung (1) nach einem der vorhergehenden Ansprüche, **dadurch gekennzeichnet, dass** der Zapfen (5) des ersten Verbindungselements (10) eine Höhe aufweist, die wenigstens der Wanddicke der Basisfläche (21) und / oder der Deckfläche (23) des zweiten Verbindungselements (20) entspricht.

10. Verbindungsanordnung (1) nach einem der vorhergehenden Ansprüche, **dadurch gekennzeichnet, dass** die Basisfläche (21) und/oder die Deckfläche (23) des Verbindungselements (10, 20) wenigstens ein Führungselement (111, 131, 211, 231) aufweist.

11. Verbindungsanordnung (1) nach einem der vorhergehenden Ansprüche, **dadurch gekennzeichnet, dass** die Basisfläche (21) und/oder die Deckfläche (23) des zweiten Verbindungselements (20) eine im Querschnitt etwa dreieckförmig ausgebildete, um etwa eine Wanddicke versetzt angeordnete Fläche (210, 230) aufweist.

12. Verbindungsanordnung (1) nach Anspruch 9, **dadurch gekennzeichnet, dass** die Basisfläche (21) und / oder die Deckfläche (23) des zweiten Verbindungselements (20) wenigstens eine Kerbe (213, 233) aufweist.

## Claims

1. Connection assembly (1) for cable channel elements (3, 4), which are arranged in a corner region, comprising at least one first connecting element (10) which in turn comprises a base surface (11) and a top surface (13) spaced apart from this by a side surface (12), a cable channel element (31), and at least one second connecting element (20) which comprises a base surface (21) and a top surface (23) arranged spaced apart from this by a side surface (22), and a further cable channel element (41), wherein the connecting elements (10, 20) comprise at least one latching element (2) which can be brought into operational connection with the respective cable channel element (31, 41), wherein the connecting elements (10, 20) are arranged such as to be rotatable in relation to one another, and wherein the first connecting element (10) encloses and at least partially covers the second connecting element (20), wherein the first connecting element (10) comprises at least one pin (5) arranged at its base surface (11) and/or at its top surface (13), and the second connecting element (20) comprises at least one opening (6) arranged on its base surface (21) and/or its top surface (22), as well as at least one web (7) spaced at a distance from this, wherein the pin (5) of the first connecting element (10) is arranged such as to be rotatable in the opening (6) of the second connecting element (20), wherein the point of rotation of the connecting elements (10,20), comprising the pin (5) of the first connecting element (10), arranged in the opening (6) of the second connecting element (20), is arranged at a spacing interval from the web (7) in the second connecting element (20), **characterised in that** the web (7) of the second connecting element (20) is configured in such a way that, at the end of the side surface (22), it extends over the total height of the second connecting element (20), it is arranged at approximately right angles to the side surface (22) and exhibits a height which corresponds to approximately double the wall thickness of the side surface (12) of the first connecting element (10), and projects into the first connecting element (10) in such a way that it is either in contact at the side surface (12) or is arranged spaced at a distance from this, such that, with a different angle setting of the first connecting element (10) to the second connecting element (20), from the outside no gap can be identified between the connecting elements (10, 20).

2. Connection assembly (1) according to claim 1, **characterised in that** the pin (5) of the first connecting element (10) is arranged as one single piece at the base surface (11) and/or at the top surface (13).

3. Connection assembly (1) according to any one of the preceding claims, **characterised in that** a blocking element (8), spaced at a distance from the pin (5) of the first connecting element (10), is arranged at the base surface (11) and/or at the top surface (13).

4. Connection assembly (1) according to any one of the preceding claims, **characterised in that** at least one projection (9) is arranged at a spacing interval from the opening (6) of the second connecting element (20).

5. Connection assembly (1) according to claim 3 or claim 4, **characterised in that**, in a first angle setting of the first connecting element (10) to the second connecting element (20), the projection (9) of the second connecting element (20) is in contact with the blocking element (8) of the first connecting element (10).

6. Connection assembly (1) according to claim 3 or claim 4, **characterised in that**, in a second angle setting of the first connecting element (10) the second connecting element (20), the projection (9) of the second connecting element (20) is arranged at a spacing interval from the blocking element (8) of the first connecting element (10).

7. Connection assembly (1) according to any one of the preceding claims, **characterised in that** the point of rotation, comprising the pin (5) of the first connecting element (10) arranged in the opening (6) of the second connecting element (20), is arranged in the base surface (21) and/or the top surface (23) of the second connecting element (20).

8. Connection assembly (1) according to any one of the preceding claims, **characterised in that** the pin (5) of the first connecting element (10) is configured in cross-section as approximately round, oval, prismatic or polygonal.

9. Connection assembly (1) according to any one of the preceding claims, **characterised in that** the pin (5) of the first connecting element (10) exhibits a height which corresponds to at least the wall thickness of the base surface (21) and/or the top surface (23) of the second connecting element (20).

10. Connection assembly (1) according to any one of the preceding claims, **characterised in that** the base surface (21) and/or the top surface (23) of the connecting element (10, 20) comprises at least one guide element (111, 131, 211 231).

11. Connection assembly (1) according to any one of the preceding claims, **characterised in that** the base surface (21) and/or the top surface (23) of the second connecting element (20) comprises a surface (210, 230), configured in cross-section as approximately triangular, offset by approximately one wall thickness.

12. Connection assembly (1) according to claim 9, **characterised in that** the base surface (21) and/or the top surface (23) of the second connecting element (20) exhibits at least one notch (213, 233).

## Revendications

1. Agencement de liaison (1) pour systèmes de chemin de câbles (3, 4) disposés dans un coin, comportant au moins un premier élément de liaison (10), lequel présente une surface de base (11) et, au-dessus, éloignée de la précédente par une surface latérale (12), une surface de couverture (13), comportant un élément de chemin de câble (31) et au moins un second élément de liaison (20), lequel présente une surface de base (21) et, au-dessus, éloignée de la précédente par une surface latérale (22), une surface de couverture (23), et comportant un élément de chemin de câble (41) supplémentaire ; les éléments de liaison (10, 20) présentant au moins un élément d'encliquetage (2) afin de réaliser une liaison active avec un élément de chemin de câble (31, 41) respectif, les éléments de liaison (10, 20) étant disposés de manière rotative l'un par rapport à l'autre et le premier élément de liaison (10) englobant, au moins partiellement, par recouvrement, le second élément de liaison (20), le premier élément de liaison (10) présentant disposé sur sa surface de base (11) et/ou sur sa surface de couverture (13) un tourillon (5) et le second élément de liaison (20) au moins une ouverture (6) disposée sur sa surface de base (21) et/ou sur sa surface de couverture (23) ainsi qu'au moins un montant (7) disposé à distance de celle-ci, le tourillon (5) du premier élément de liaison (10) étant disposé de manière rotative dans l'ouverture (6) du second élément de liaison (20), le point de rotation des éléments de liaison (10, 20), comprenant le tourillon (5) du premier élément de liaison (10) disposé dans l'ouverture (6) du second élément de liaison (20), étant disposé à distance du montant (7) dans le second élément de liaison (20), **caractérisé en ce que** le montant (7) du second élément de liaison (20) est conformé de telle sorte qu'il s'étend à l'extrémité de la surface latérale (22) sur toute la hauteur du second élément de liaison (20), est disposé sensiblement perpendiculairement à la surface latérale (22) et présente une hauteur qui correspond sensiblement au double de l'épaisseur de la paroi de la surface latérale (12) du premier élément de liaison (10) et s'engage de telle sorte dans le premier élément de liaison (10) qu'il est, soit en appui sur la surface latérale (10), soit disposé à distance de celle-ci, de manière à ce qu'aucune fente entre les éléments de liaison (10, 20) n'est visible de l'extérieur lorsque la position angulaire du premier élément de liaison (10) diffère par rapport au second élément de liaison (20).

2. Agencement de liaison (1) selon la revendication 1, **caractérisé en ce que** le tourillon (5) du premier élément de liaison (10) est disposé d'un seul tenant sur la surface de base (11) et/ou sur la surface de couverture (13).

3. Agencement de liaison (1) selon l'une des revendications précédentes, **caractérisé en ce qu'**un élément de verrouillage (8) est disposé à distance du tourillon (5) du premier élément de liaison (10) sur la surface de base (11) et/ou sur la surface de couverture (13).

4. Agencement de liaison (1) selon l'une des revendications précédentes, **caractérisé en ce qu'**au moins une avancée (9) est placée à distance de l'ouverture (6) du second élément de liaison (20).

5. Agencement de liaison (1) selon la revendication 3 ou la revendication 4, **caractérisé en ce que,** dans une première position angulaire du premier élément de liaison (10) par rapport au second élément de liaison (20), l'avancée (9) du second élément de liaison (20) est en appui sur l'élément de verrouillage (8) du premier élément de liaison (10).

6. Agencement de liaison (1) selon la revendication 3 ou la revendication 4, **caractérisé en ce que,** dans une seconde position angulaire du premier élément de liaison (10) par rapport au second élément de liaison (20), l'avancée (9) du second élément de liaison (20) est disposée à distance de l'élément de verrouillage (8) du premier élément de liaison (10).

7. Agencement de liaison (1) selon l'une des revendications précédentes, **caractérisé en ce que** le point de rotation comprenant le tourillon (5) du premier élément de liaison (10) placé dans l'ouverture (6) du second élément de liaison (20), est disposé dans la surface de base (21) et/ou dans la surface de couverture (23) du second élément de liaison (20).

8. Agencement de liaison (1) selon l'une des revendications précédentes, **caractérisé en ce que** le tourillon (5) du premier élément de liaison (10) est conformé avec une section sensiblement ronde, ovale, prismatique ou à plusieurs angles.

9. Agencement de liaison (1) selon l'une des revendications précédentes, **caractérisé en ce que** le tourillon (5) du premier élément de liaison (10) présente une hauteur qui correspond au moins à l'épaisseur de la paroi de la surface de base (21) et/ou de la surface de couverture (23) du second élément de liaison (20).

10. Agencement de liaison (1) selon l'une des revendications précédentes, **caractérisé en ce que** la surface de base (21) et/ou la surface de couverture (23) de l'élément de liaison (10, 20) présente au moins un élément de guidage (111, 131, 211, 231).

11. Agencement de liaison (1) selon l'une des revendications précédentes, **caractérisé en ce que** la surface de base (21) et/ou la surface de couverture (23) du second élément de liaison (20) présente une section conformée sensiblement de forme triangulaire dont la surface (210, 230) est disposée en décalage d'une épaisseur de paroi.

12. Agencement de liaison (1) selon la revendication 9, **caractérisé en ce que** la surface de base (21) et/ou la surface de couverture (23) du second élément de liaison (20) présente au moins une encoche (213, 233).
